# EUROPEAN PATENT SPECIFICATION

(11) **EP 3 181 388 B1**
(45) Date of publication and mention of the grant of the patent: **29.08.2018**
(21) Application number: 15200635.9
(22) Date of filing: 17.12.2015
(51) Int. Cl.: B60J 7/22

(54) **WIND DEFLECTOR ASSEMBLY**
WINDABLENKANORDNUNG
ENSEMBLE DÉFLECTEUR DE VENT

(43) Date of publication of application: 21.06.2017
(73) Proprietor: Inalfa Roof Systems Group B.V., 5804 AB Venray (NL)
(72) Inventor: ALBERS, Thomas Anton Martijnszoon, 5801 BN Venray (NL)
(74) Representative: De Vries & Metman

(56) References cited:
- EP-A1- 0 744 311
- DE-A1-102004 027 087
- DE-A1-102006 019 967
- DE-A1-102015 000 964

## Description

The invention relates to a wind deflector assembly intended for use in front of a roof opening of an open roof construction for a vehicle, comprising a wind deflector member which extends in a transverse direction of the vehicle and which is movable between a retracted position and an extended position.

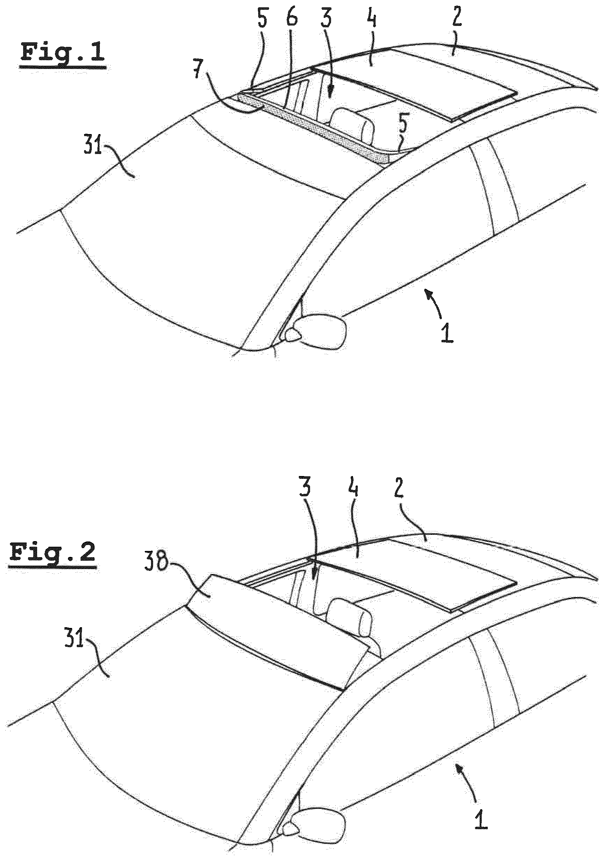

A first type of a state of the art wind deflector assembly (illustrated in figure 1) comprises two pivotable wind deflector arms at opposite transverse sides of the roof opening which at free ends are connected by a wind deflector beam. A mesh material extends between said wind deflector beam and a stationary part of the vehicle and, in the extended position, is capable of creating a turbulent flow pattern above the roof opening for reducing wind noise such as booming. In a retracted position the wind deflector arms are pivoted inwardly and the wind deflector beam and mesh material are housed/retracted within the outer contour of the vehicle roof. A disadvantage of such a wind deflector assembly is the fact that the wind deflector due to its design requires much space, both in the longitudinal direction and in a vertical direction, for accommodating it in the retracted position. Further the mesh material in the extended position extends quite vertically which may detrimentally influence the aerodynamics and styling of the vehicle. Finally, in the extended position the mesh material generally will be visible for occupants of the vehicle and as a result it limits an "open sky" feeling.

A second type of a state of the art wind deflector assembly (illustrated in figure 2) comprises a pivotable spoiler panel positioned in front of the roof opening. In an extended (outwardly pivoted) position the spoiler panel causes a laminar flow pattern over the roof opening for reducing wind noise. Such a wind deflector assembly also suffers from a number of drawbacks. Firstly, because a mesh material is not present, it lacks the ability to reduce certain types of wind noise. Secondly, because the spoiler panel is positioned in front of the roof opening and a rear edge of the spoiler panel in the extended position has moved still further in a forward direction relative to the roof opening (as a result of its pivotal movement around a pivot axis), the distance between said rear edge and the rear edge of the roof opening becomes rather large with an increased risk of wind dropping into the roof opening. Further, because the part of the vehicle roof where the spoiler panel is located, generally will have a curved contour in the transverse direction, it is almost impossible to achieve that the (likewise curved) forward edge of the spoiler panel in the extended position is aligned with the curved edge of the adjacent part of the vehicle roof, which will result in a gap which is undesirable, both in view of aerodynamics and aesthetics. Finally, for having the required effect the rear edge of the spoiler panel in the extended position should reach a height which is comparable to the height reached by a wind deflector beam as described above. This results in a position of the spoiler panel with a rather elevated inclination with respect to the vehicle (specifically with respect to the wind shield) which in an aesthetical point of view is undesirable. Another state of the art wind deflector assembly is shown in DE 10 2006 019 967 A1.

It is an object of the present invention to provide an improved wind deflector assembly.

Thus, in accordance with the present invention a wind deflector assembly in accordance with the preamble of the main claim is provided which is characterized in that the wind deflector member comprises a spoiler part and a mesh part of which one is positioned on top of the other and which are slidable relative to each other in a longitudinal direction of the vehicle between an overlapping position in the retracted position of the wind deflector member and a staggered position in the extended position of the wind deflector member, wherein one of the spoiler part and mesh part at a forward end through a first pivot is pivotably connected to the vehicle whereas the other of the spoiler part and mesh part at a rearward end is hingeably connected to a first end of at least one pivotable wind deflector arm of which an opposite second end through a second pivot is pivotably connected to the vehicle.

In the retracted position of the wind deflector member its spoiler part and mesh part overlap each other maximally (maximally means as much as possible as allowed by the specific design). When the wind deflector arm, starting in the retracted position of the wind deflector member, is pivoted the wind deflector member is pivoted around the first pivot towards its extended position and at the same time the spoiler part and mesh part are slid relative to each other toward the staggered position in which the overlap between them is reduced and thus, in fact, the wind deflector member has increased in length. Due to this increase in length the rear end of the wind deflector member will be positioned closer to the rear edge of the roof opening, whereas further as a result of the increased length the angle of inclination of the wind deflector member which is required for insuring that its rear edge reaches the required height, is reduced.

The wind deflector member in the extended position in a surprising manner is capable of combining the actions of a state of the art spoiler panel (through the spoiler part) and of a state of the art mesh material (through the mesh part), while in the retracted position its dimensions are minimised such that it can be accommodated in a surprisingly reduced space in the vehicle roof. Thus such a combined wind deflector member eliminates the drawbacks or disadvantages elucidated previously

The manner in which the spoiler part and mesh part slide relative to each other may be realised in any known manner, for example using cooperating longitudinal guides or guide parts.

Of course the design and position/orientation of the wind deflector arm should be such that during its pivotal motion from a position within the contour of the vehicle roof towards a position outside of the roof contour the wind deflector member indeed is moved between its retracted and extended positions (and thus the spoiler part and mesh part are moved between the overlapping and staggered positions).

In one embodiment the spoiler part is positioned on top of the mesh part, the mesh part at a forward end through said first pivot is pivotably connected to the vehicle and the spoiler part at a rearward end is hingeably connected to said first end of said at least one wind deflector arm.

In such an embodiment the mesh part basically only will pivot around the first pivot, whereas the spoiler part both pivots around said first pivot and slides relative to the mesh part. In the extended position of the wind deflector member the mesh part is positioned closest to the vehicle roof and the spoiler part is located furthest away from the vehicle roof, resulting in a specific flow pattern above the roof opening. The spoiler part can be designed such that its forward edge has a curved contour closely following the curved contour of the adjacent roof part in the retracted position. The forward edge of the mesh part can be designed such that its forward edge has a curved contour closely following the curved contour of the adjacent roof part in the extended position. Thus it is possible to avoid a gap both in the retracted and extended positions of the wind deflector member.

In an alternative embodiment the spoiler part is positioned on top of the mesh part, the spoiler part at a forward end is pivotably connected to the vehicle and the mesh part at a rearward end is hingeably connected to said first end of said at least one wind deflector arm.

In such an embodiment the spoiler part basically only will pivot, whereas the mesh part both pivots and slides relative to the spoiler part. Now, in the extended position of the wind deflector member the spoiler part is positioned closest to the vehicle roof and the mesh part is located furthest away from the vehicle roof, resulting in a different flow pattern above the roof opening.

Whatever embodiment will be used, among others may depend on the specific design of the open roof construction and its aerodynamic characteristics.

In a preferred embodiment the first pivot has a movable position relative to the vehicle. This allows to avoid any interference between the one of the spoiler part and mesh part (whichever at its forward end through said first pivot is pivotably connected to the vehicle) and any constructional part of the vehicle (such as a cross bar).

In one embodiment, then, the first pivot is defined by a combination of a curved guide channel with a predetermined radius of curvature and a curved slide shoe with similar radius of curvature for cooperation with said guide channel. For every pivotal position of the wind deflector member there always will be only one location in the curved guide channel which provides a match with the pivotal position of the guide shoe at that moment and thus the guide shoe automatically will assume a position at that location. This also means that said one of the spoiler part and mesh part (whatever the case will be) will be displaced in addition to its pivotal movement.

In one embodiment, then, the curved guide channel is a stationary part of the vehicle, whereas the curved slide shoe is part of the one of the spoiler part and mesh part which at a forward end through said first pivot is pivotably connected to the vehicle. This may be advantageous because, generally, the curved guide channel will be a larger and thus heavier part.

It also is conceivable that the second pivot has a movable position relative to the vehicle. This may improve the performance of the wind deflector arm and the resulting movement of the wind deflector member.

In one embodiment, then, the second pivot is defined by a pivot axis which is attached to said second end of the wind deflector arm and which is slidable in a guide channel which is a stationary part of the vehicle. It should be noted, however, that also other manners for achieving a movable second pivot, are conceivable.

In a specific embodiment, in which the second pivot indeed has a movable position relative to the vehicle, the wind deflector arm through a third pivot may be pivotably connected to a first end of an auxiliary arm of which an opposite second end through a stationary fourth pivot is pivotably connected to the vehicle. This automatically leads to a movement of the second pivot when the wind deflector arm is pivoted.

Then it is also possible that the auxiliary arm preloads the wind deflector arm to a position in which the wind deflector member is in its extended position. Such an embodiment, for example may be used in an open roof construction with a movable panel for opening and closing the roof opening. When the panel closes the roof opening, the panel keeps the wind deflector arm in a lower position (retracted position of the wind deflector member). When the panel moves towards its open position the panel gradually frees the wind deflector arm which then, due to the preload, gradually pivots upward (for achieving the extended position of the wind deflector member).

In one embodiment the auxiliary arm may be defined by a spring member; for example the auxiliary arm may be a leg of a torsion spring, which then at one hand is responsible for defining part of the movement of the wind deflector arm and at the other hand also is the drive source for causing such a movement.

In an embodiment in which the spoiler part is both pivoted and slid relative to the mesh part, a rear part of the spoiler part, as seen in the longitudinal direction, at least partly may be made of a transparent material. In the extended position of the wind deflector member such a rear part may be visible for occupants of the vehicle and by making it at least partly of a transparent material (such as glass) the "open sky" feeling may be maximised, offering the occupants a free line of sight.

In one embodiment, then, the spoiler part comprises a U-shaped frame with two legs pointing longitudinally in a rearward direction and a glass panel mounted to said legs. The glass panel may be positioned between said legs only, but it is also possible that the U-shaped frame supports a glass panel extending all over said frame.

It is conceivable that the mesh part comprises a frame member spanning there between a mesh member in a fixed position relative to the frame member. The position may be such that the plane in which the mesh member extends is in parallel with the plane defined by the frame member, but the planes also may be positioned at a different angle (such that the mesh member in the extended position of the wind deflector member may be oriented at a desired angle of attack with respect to the air flow).

As an alternative the mesh part comprises a frame member and a mesh member which with a first transversally extending edge is connected to the frame member and which with an opposite second transversally extending edge is connected to a stationary part of the vehicle. In the extended position of the wind deflector member the mesh member will be tightened and in the retracted position it in a folded manner may be housed in a receiving opening.

In yet another embodiment the mesh part comprises a frame member for guiding the spoiler part and a mesh member which with a first transversally extending edge is connected to the spoiler part and which with an opposite second transversally extending edge is connected to a stationary part of the vehicle. In this embodiment the mesh part basically is divided into two separate parts, the frame member (for example two rails) and the mesh member.

For avoiding any problems with misalignments and distortions, it is advisable that the wind deflector assembly according to the present invention comprises a separate wind deflector arm at each transverse side of the wind deflector member. This means that all relevant parts cooperating with such two wind deflector arms also will be provided for each of the wind deflector arms.

Hereinafter the invention will be elucidated while referring to the drawings, in which:
Figures 1 and 2 show state of the art wind deflector assemblies;
Figures 3-5 show a first embodiment of the wind deflector assembly according to the invention in a retracted position, in a schematic side elevational view, in a partial perspective view and as applied in a vehicle, respectively;
Figures 6-8 show the first embodiment of the wind deflector assembly according to the invention in an extended position, in a schematic side elevational view, in a partial perspective view and as applied in a vehicle, respectively;
Figure 9 shows a second embodiment in a schematic side elevational view;
Figure 10 shows a third embodiment in a schematic side elevational view, and
Figure 11 shows a fourth embodiment in a schematic side elevational view.

Firstly referring to figures 1 and 2, two state of the art wind deflector assemblies are schematically illustrated. In a stationary roof part 2 of a vehicle 1 a roof opening 3 is defined which can be opened and closed by a movable panel 4. For influencing the flow pattern above the roof opening 3 (and thus for reducing disturbing noises and for preventing excessive wind entrance into the vehicle) in front of the roof opening 3 a wind deflector assembly is positioned which extends in a transverse direction of the vehicle 1 and which is movable between a retracted position and an extended position.

In figure 1 said wind deflector assembly comprises two pivotable wind deflector arms 5 connected by a transverse wind deflector beam 6. A mesh material 7 extends between the wind deflector beam 6 and a stationary part of the vehicle 1. In the illustrated extended position the mesh material 7 is tensioned and air can flow through it, yielding a substantially turbulent flow pattern above the roof opening 3.

In figure 2 said wind deflector assembly comprises a pivotable spoiler panel 38 which in an extended, outwardly pivoted position causes a substantially laminar flow pattern above the roof opening 3.

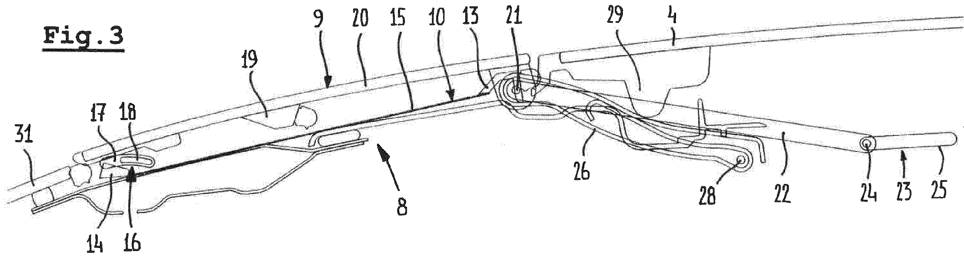

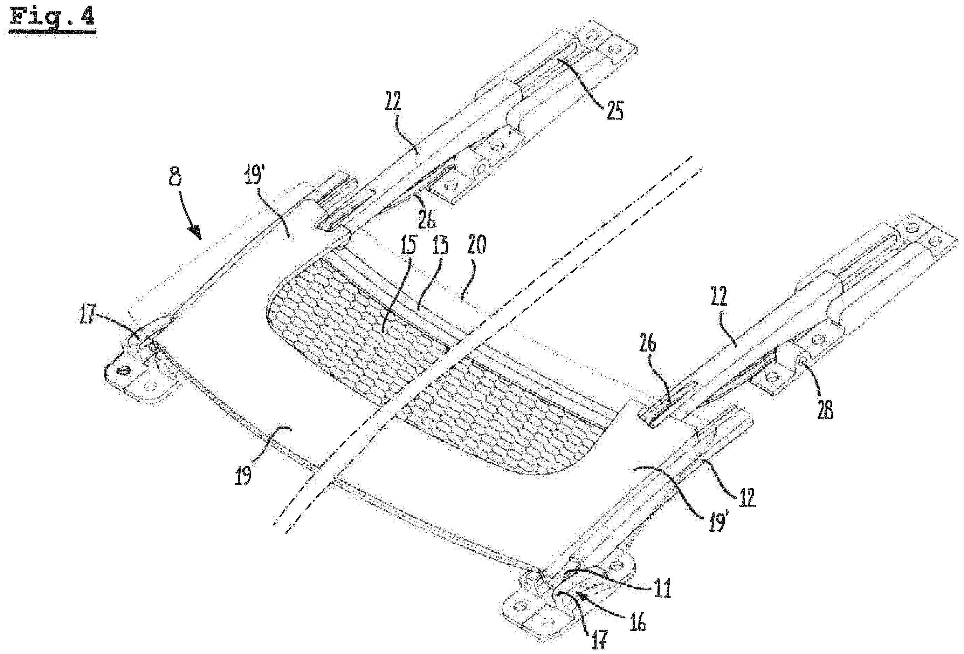

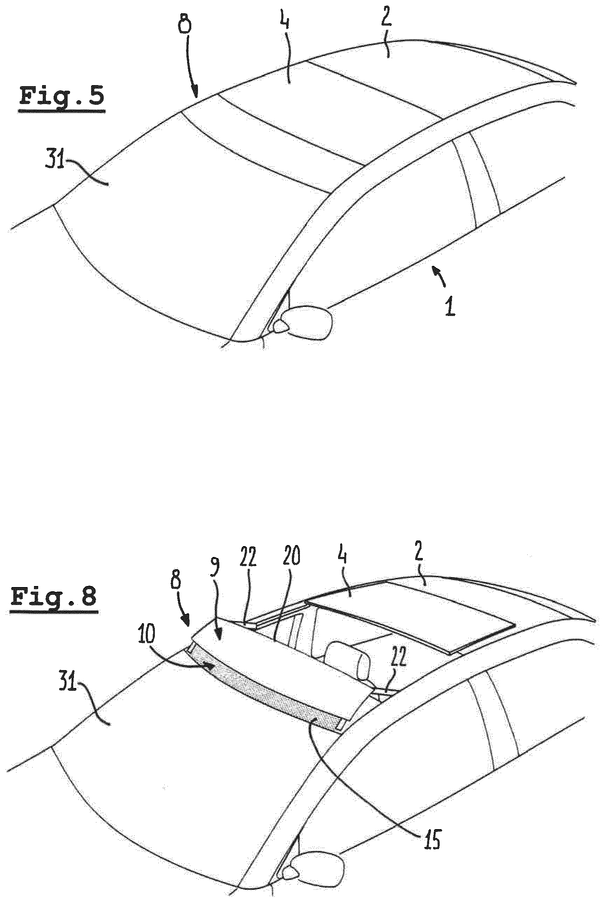

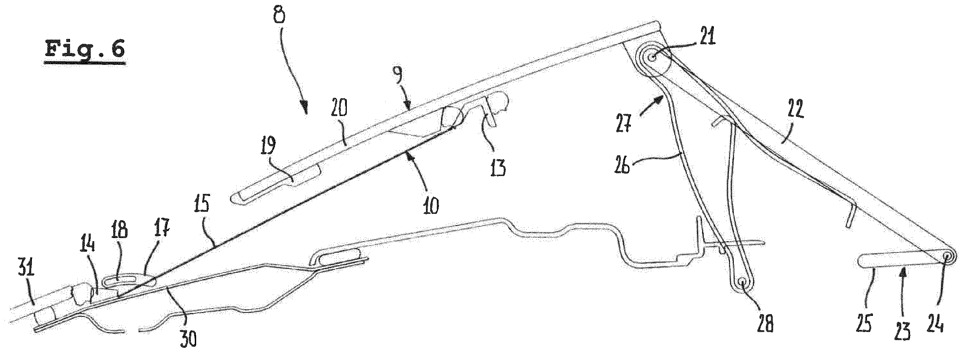

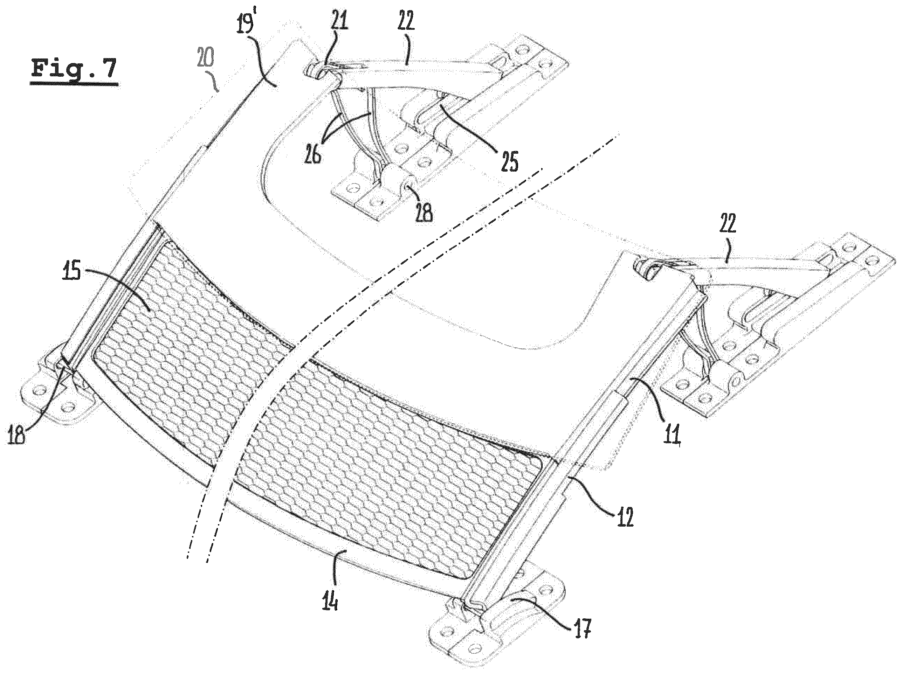

Now referring to figures 3-5 a first embodiment of the wind deflector assembly according to the present invention is illustrated in a retracted position. This first embodiment is provided with a wind deflector member 8 which comprises a spoiler part 9 and a mesh part 10. The spoiler part 9 is positioned on top of the mesh part 10 and both are provided with cooperating guide means 11,12 (see figure 4) such that they are slidable relative to each other in a longitudinal direction of the vehicle 1 between an overlapping position (best illustrated in figures 3 and 4) in a retracted position of the wind deflector member 8 and a staggered position (best illustrated in figures 6 and 7) in an extended position of the wind deflector member 8.

The mesh part 10 comprises a frame member (of which in figure 3 only transverse rear and frontal frame parts 13 and 14 are visible which at their ends are connected by other longitudinally extending frame parts, for example the guide means 12 illustrated in figure 4) spanning there between a mesh member 15 in a fixed position relative to the frame member.

The mesh part 10 at a forward end through a first pivot 16 is pivotably connected to the vehicle 1. Said first pivot 16 is defined by a combination of a curved guide channel 17 (which in this embodiment is a stationary part of the vehicle 1) with a predetermined radius of curvature and a curved slide shoe 18 (which in this embodiment is part of the mesh part 10 and has a fixed position relative to it) with similar radius of curvature for cooperation with said guide channel 17. As a result the first pivot 16 has a movable position relative to the vehicle 1.

The spoiler part 9 (which in the illustrated embodiment comprises a U-shaped frame 19 with two legs 19' pointing longitudinally in a rearward direction and a glass panel 20 mounted to said frame 19) at a rearward end through a hinge 21 is pivotably connected to a first end of a wind deflector arm 22 of which an opposite second end through a second pivot 23 is pivotably connected to the vehicle 1.

The second pivot 23 is defined by a pivot axis 24 which is attached to said second end of the wind deflector arm 22 and which is slidable in a guide channel 25 which is a stationary part of the vehicle 1. As a result the second pivot also has a movable position relative to the vehicle 1.

A torsion spring 26 is provided which engages the wind deflector arm 22 at a virtual third pivot 27 (see figure 6) and which engages the vehicle 1 at a stationary fourth pivot 28. Thus this torsion spring 26 defines an auxiliary arm of which a first end engages the wind deflector arm 22 and of which an opposite second is pivotably connected to the vehicle. The torsion spring 26 preloads the wind deflector arm 22 to a position in which the wind deflector member 8 is in its extended position (as illustrated in figure 6).

In a position in which the movable panel 4 closes the roof opening 3, an abutment part 29 on the panel 4 abuts the wind deflector arm 22 or the torsion spring 26 for keeping the wind deflector member 8 in its retracted position against the preload of the torsion spring 26 (figures 3-5).

When the panel 4 starts to move towards an open position (in figure 3 to the right), the wind deflector arm 22, forced by the torsion spring 26, will gradually rotate clockwise around the pivot axis 24 of the third pivot 23. Because of the presence of the torsion spring 26 (acting as an auxiliary arm between the -virtual- third pivot 27 and fourth pivot 28) such a rotation of the wind deflector arm 22 only is possible when the pivot axis 24 at the same time moves to the right in the guide channel 25.

The resulting movement of the wind deflector arm 22 causes the spoiler part 9 to slide relative to the mesh part 10 to a staggered position (in which the wind deflector member 8 has become longer) while at the same time the wind deflector member 8 (combination of spoiler part 9 and mesh part 10) will rotate counter clockwise around first pivot 16.

As a result of the rotation of the wind deflector member 8 (and thus of its mesh part 10) the curved slide shoe 18 (which, as stated previously, has a fixed position relative to the mesh part 10) also will rotate to a different orientation and this will cause the slide shoe 18 to move to a new position in the curved guide channel 17 which has a similar orientation. The resulting movement of the slide shoe 18 is used to ensure that during rotation a part of the mesh part 10 (such as the frontal frame part 14) or front edge of the spoiler part 9 will not interfere with other parts of the vehicle, such as a cross beam 30. Also it may be assured like this that a most forward edge of the mesh part 10 in the extended position is positioned close to an edge of an adjacent part of the vehicle for minimising a gap there between.

The resulting extended position of the wind deflector member 8 appears from figures 6-8. In this position the mesh member 15 of the mesh part 10 is positioned closest to the vehicle 1 and may cause a turbulent flow pattern. The spoiler part 9 is positioned further away from the vehicle and may cause a laminar flow pattern. The resulting combined flow pattern is very effective. Moreover, as a result of the increased length of the wind deflector member 8 in the extended position, its angle with respect to the vehicle 1 (for example with respect to the wind shield 31) may be kept smaller compared to the state of the art (figure 2) while still having a rear edge sufficiently high above the roof opening 3 (and sufficiently close to a rear edge of the roof opening).

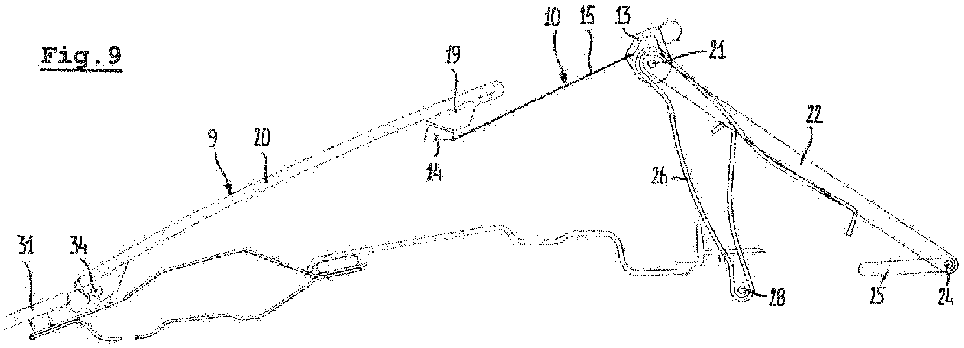

Figure 9 schematically illustrates an alternative embodiment which operates in a similar manner as the embodiment described previously, but in which the wind deflector member 8 now comprises a spoiler part 9 that at its forward edge cooperates with the vehicle through a hinge 34. In this embodiment the rear edge of the mesh part 10 is hingeably connected to the wind deflector arm 22. In an extended position of the wind deflector member 8 the mesh member 15 has been slid to the rear relative to the spoiler part 9 and is now further away from the vehicle 1 than the spoiler part 9. This may create a different flow pattern above the roof opening 3.

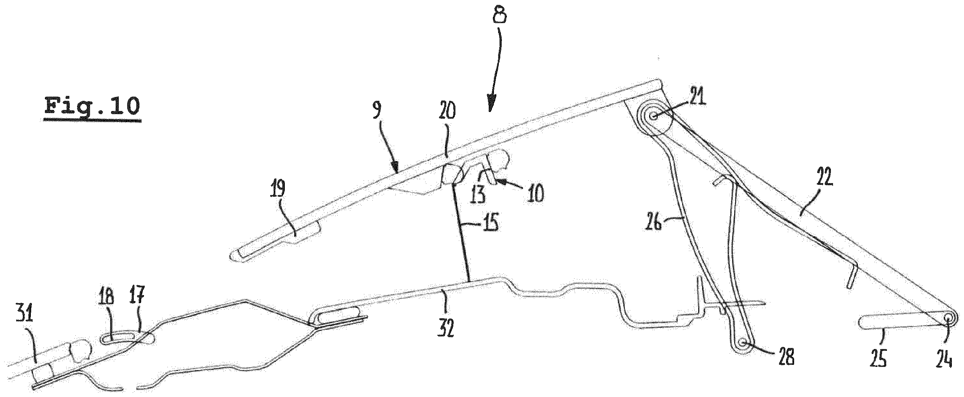

In figure 10 an embodiment is illustrated in which the mesh member 15 extends between a part of a frame member of the mesh part 10 (for example the rear frame part 13) and a stationary part 32 of the vehicle. In this embodiment the mesh part 15 will assume a more vertical position in the extended position of the wind deflector member 8 compared to the previous embodiments.

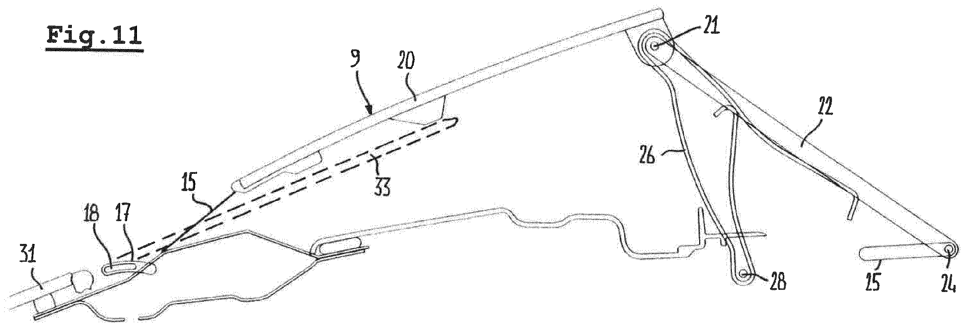

Finally figure 11 illustrates an embodiment in which the mesh part comprises longitudinal frame parts 33 (shown in broken lines) which now do not carry a mesh member and along which the spoiler part 9 will slide (and carrying at the frontal ends the slide shoes 18) and a separate mesh member 15 which with a first transversally extending edge is connected to the spoiler part 9 and which with an opposite second transversally extending edge is connected to a stationary part of the vehicle.

It is noted that the wind deflector assemblies generally will comprise a separate wind deflector arm 22 at each transverse side of the wind deflector member 8. This means that the parts described in the above then will be provided at both sides of the assemblies.

The invention is not limited to the embodiments described before which may be varied widely within the scope of the invention as defined by the appending claims.

## Claims

1. Wind deflector assembly intended for use in front of a roof opening (3) of an open roof construction for a vehicle (1), comprising a wind deflector member (8) which extends in a transverse direction of the vehicle and which is movable between a retracted position and an extended position, **characterized in that** the wind deflector member (8) comprises a spoiler part (9) and a mesh part (10) of which one is positioned on top of the other and which are slidable relative to each other in a longitudinal direction of the vehicle between an overlapping position in the retracted position of the wind deflector member and a staggered position in the extended position of the wind deflector member, wherein one of the spoiler part (9) and mesh part (10) at a forward end through a first pivot (16) is pivotably connected to the vehicle whereas the other of the spoiler part and mesh part at a rearward end is hingeably connected (21) to a first end of at least one pivotable wind deflector arm (22) of which an opposite second end through a second pivot (23) is pivotably connected to the vehicle.

2. Wind deflector assembly according to claim 1, wherein the spoiler part (9) is positioned on top of the mesh part (10), the mesh part at a forward end through said first pivot (16) is pivotably connected to the vehicle (1) and the spoiler part at a rearward end is hingeably connected (21) to said first end of said at least one wind deflector arm (22).

3. Wind deflector assembly according to claim 1, wherein the spoiler part (9) is positioned on top of the mesh part (10), the spoiler part at a forward end is pivotably connected to the vehicle and the mesh part at a rearward end is hingeably connected to said first end of said at least one wind deflector arm (22).

4. Wind deflector assembly according to any of the previous claims, wherein the first pivot (16) has a movable position relative to the vehicle (1).

5. Wind deflector assembly according to claim 4, wherein the first pivot (16) is defined by a combination of a curved guide channel (17) with a predetermined radius of curvature and a curved slide shoe (18) with similar radius of curvature for cooperation with said guide channel.

6. Wind deflector assembly according to claim 5, wherein the curved guide channel (17) is a stationary part of the vehicle (1), whereas the curved slide shoe (18) is part of the one of the spoiler part (9) and mesh part (10) which at a forward end through said first pivot (16) is pivotably connected to the vehicle.

7. Wind deflector assembly according to any of the previous claims, wherein the second pivot (23) has a movable position relative to the vehicle (1).

8. Wind deflector assembly according to claim 7, wherein the second pivot (23) is defined by a pivot axis (24) which is attached to said second end of the wind deflector arm (22) and which is slidable in a guide channel (25) which is a stationary part of the vehicle (1).

9. Wind deflector assembly according to claim 7 or 8, wherein the wind deflector arm (22) through a third pivot (27) is pivotably connected to a first end of an auxiliary arm (26) of which an opposite second end through a stationary fourth pivot (28) is pivotably connected to the vehicle (1).

10. Wind deflector assembly according to claim 9, wherein the auxiliary arm (26) preloads the wind deflector arm (22) to a position in which the wind deflector member (8) is in its extended position.

11. Wind deflector assembly according to claim 10, wherein the auxiliary arm is defined by a spring member (26) .

12. Wind deflector according to claim 11, wherein the auxiliary arm is a leg of a torsion spring (26).

13. Wind deflector assembly according to claim 2, wherein a rear part of the spoiler part (9), as seen in the longitudinal direction, at least partly is made of a transparent material.

14. Wind deflector assembly according to claim 13, wherein the spoiler part comprises a U-shaped frame (19) with two legs (19') pointing longitudinally in a rearward direction and a glass panel (20) mounted to said legs.

15. Wind deflector assembly according to any of the previous claims, wherein the mesh part (10) comprises a frame member (13,14) spanning there between a mesh member (15) in a fixed position relative to the frame member.

16. Wind deflector assembly according to any of the claims 1-14, wherein the mesh part (10) comprises a frame member (13) and a mesh member (15) which with a first transversally extending edge is connected to the frame member and which with an opposite second transversally extending edge is connected to a stationary part (32) of the vehicle.

17. Wind deflector assembly according to any of the claims 1-14, wherein the mesh part (10) comprises a frame member (33) for guiding the spoiler part (9) and a mesh member (15) which with a first transversally extending edge is connected to the spoiler part (9) and which with an opposite second transversally extending edge is connected to a stationary part of the vehicle (1).

18. Wind deflector assembly according to any of the previous claims, comprising a separate wind deflector arm (22) at each transverse side of the wind deflector member (8).

## Patentansprüche

1. Windabweiser-Einrichtung, welche zur Verwendung vor einer Dachöffnung (3) in einer offenen Dachkonstruktion für ein Fahrzeug (1) gedacht ist, aufweisend ein Windabweiserelement (8), welches sich in einer Querrichtung des Fahrzeugs erstreckt und welches zwischen einer Eingefahren-Position und einer Ausgefahrenen-Position bewegbar ist, **gekennzeichnet dadurch, dass** das Windabweiserelement (8) einen Spoiler-Teil (9) und einen Netz-Teil (10) aufweist, von welchen einer über dem anderen liegend angeordnet ist und welche in einer Längsrichtung des Fahrzeugs relativ zueinander zwischen einer Überlappungsstellung in der Eingefahren-Position des Windabweiserelements und einer Versetzt-Stellung in der Ausgefahren-Position des Windabweiserelements verschiebbar sind, wobei einer von dem Spoiler-Teil (9) und dem Netz-Teil (10) an einem vorderen Ende durch ein erstes Gelenk (16) mit dem Fahrzeug schwenkbar verbunden ist, wobei der andere von dem Spoiler-Teil und dem Netz-Teil an einem hinteren Ende gelenkig verbunden (21) ist mit einem ersten Ende von mindestens einem schwenkbaren Windabweiserarm (22), von welchem ein entgegengesetztes zweites Ende durch ein zweites Gelenk (23) schwenkbar mit dem Fahrzeug verbunden ist.

2. Windabweiser-Einrichtung gemäß Anspruch 1, wobei der Spoiler-Teil (9) über dem Netz-Teil (10) angeordnet ist, der Netz-Teil an einem vorderen Ende durch das erste Gelenk (16) schwenkbar mit dem Fahrzeug (1) verbunden ist und der Spoiler-Teil an einem hinteren Ende mit dem ersten Ende des mindestens einen schwenkbaren Windabweiserarms (22) gelenkig verbunden (21) ist.

3. Windabweiser-Einrichtung gemäß Anspruch 1, wobei der Spoiler-Teil (9) über dem Netz-Teil (10) angeordnet ist, der Spoiler-Teil an einem vorderen Ende schwenkbar mit dem Fahrzeug verbunden ist und der Netz-Teil an einem hinteren Ende mit dem ersten Ende des mindestens einen schwenkbaren Windabweiserarms (22) gelenkig verbunden ist.

4. Windabweiser-Einrichtung gemäß irgendeinem der vorhergehenden Ansprüche, wobei das erste Gelenk (16) eine bewegbare Stellung bezüglich des Fahrzeugs (1) hat.

5. Windabweiser-Einrichtung gemäß Anspruch 4, wobei das erste Gelenk (16) definiert ist durch eine Kombination von einem gekrümmten Führungskanal (17) mit einem vorbestimmten Krümmungsradius und einem gekrümmten Gleitschuh (18) mit ähnlichem Krümmungsradius zur Kooperation mit dem Führungskanal.

6. Windabweiser-Einrichtung gemäß Anspruch 5, wobei der gekrümmte Führungskanal (17) ein stationäres Teil des Fahrzeugs (1) ist, wobei der gekrümmte Gleitschuh (18) Teil von dem einen von dem Spoiler-Teil (9) und dem Netz-Teil (10), welcher an einem vorderen Ende durch das Gelenk (16) schwenkbar mit dem Fahrzeug verbunden ist, ist.

7. Windabweiser-Einrichtung gemäß irgendeinem der vorhergehenden Ansprüche, wobei das zweite Gelenk (23) eine bewegbare Stellung bezüglich des Fahrzeugs (1) hat.

8. Windabweiser-Einrichtung gemäß Anspruch 7, wobei das zweite Gelenk (23) definiert ist durch eine Gelenkachse (24), welche an dem zweiten Ende des Windabweiserarms (22) angebracht ist und welche in einem Führungskanal (25), der ein stationäres Teil des Fahrzeugs (1) ist, verschiebbar ist.

9. Windabweiser-Einrichtung gemäß Anspruch 7 oder 8, wobei der Windabweiserarms (22) durch ein drittes Gelenk (27) schwenkbar mit einem ersten Ende eines Hilfsarms (26), von welchem ein entgegengesetztes zweites Ende durch ein stationäres viertes Gelenk (28) schwenkbar mit dem Fahrzeug (1) verbunden ist, verbunden ist.

10. Windabweiser-Einrichtung gemäß Anspruch 9, wobei der Hilfsarm (26) den Windabweiserarm (22) in eine Position, in welcher das Windabweiserelement (8) sich in seiner Ausgefahren-Position befindet, vorspannt.

11. Windabweiser-Einrichtung gemäß Anspruch 10, wobei der Hilfsarm durch ein Federelement (26) definiert ist.

12. Windabweiser-Einrichtung gemäß Anspruch 11, wobei der Hilfsarm ein Schenkel einer Torsionsfeder (26) ist.

13. Windabweiser-Einrichtung gemäß Anspruch 2, wobei, in der Längsrichtung gesehen, ein hinterer Teil des Spoiler-Teils (9) mindestens teilweise aus einem transparenten Material gefertigt ist.

14. Windabweiser-Einrichtung gemäß Anspruch 13, wobei der Spoiler-Teil einen U-förmigen Rahmen (19) mit zwei Schenkeln (19'), welche longitudinal in eine Rückwärtsrichtung zeigen, und ein Glaspaneel (20), welches an den Schenkeln montiert ist, aufweist.

15. Windabweiser-Einrichtung gemäß irgendeinem der vorhergehenden Ansprüche, wobei der Netz-Teil (10) ein Rahmenelement (13, 14) aufweist, welches sich zwischen einem Netzelement (15) in einer festen Position relativ zu dem Rahmenelement erstreckt.

16. Windabweiser-Einrichtung gemäß irgendeinem der Ansprüche 1-14, wobei der Netz-Teil (10) ein Rahmenelement (13) und ein Netzelement (15), welches mit einem ersten, sich quer erstreckenden Rand verbunden ist mit dem Rahmenelement und welches mit einem entgegengesetzten zweiten, sich quer erstreckenden Rand verbunden ist mit einem stationären Teil (32) des Fahrzeugs, aufweist.

17. Windabweiser-Einrichtung gemäß irgendeinem der Ansprüche 1-14, wobei der Netz-Teil (10) ein Rahmenelement (33) zum Führen des Spoiler-Teils (9) und ein Netzelement (15), welches mit einem ersten, sich quer erstreckenden Rand verbunden ist mit dem Spoiler-Teil (9) und welches mit einem entgegengesetzten zweiten, sich quer erstreckenden Rand verbunden ist mit einem stationären Teil (32) des Fahrzeugs, aufweist.

18. Windabweiser-Einrichtung gemäß irgendeinem der vorhergehenden Ansprüche, welche einen separaten Windabweiserarm (22) an jeder Querseite des Windabweiserelements (8) aufweist.

## Revendications

1. Ensemble déflecteur d'air destiné à être utilisé à l'avant d'une ouverture de toit (3) d'une construction de toit ouvrant pour un véhicule (1), comprenant un organe déflecteur d'air (8) qui s'étend dans une direction transversale du véhicule et qui est mobile entre une position rétractée et une position étendue, **caractérisé en ce que** l'organe déflecteur d'air (8) comprend une partie de béquet (9) et une partie de grillage (10) dont l'une est positionnée par-dessus l'autre et qui sont coulissantes l'une par rapport à l'autre dans une direction longitudinale du véhicule entre une position de chevauchement dans la position rétractée de l'organe déflecteur d'air et une position en quinconce dans la position étendue de l'organe déflecteur d'air, dans lequel l'une de la partie de béquet (9) et de la partie de grillage (10) au niveau d'une extrémité vers l'avant par le biais d'un premier pivot (16) est raccordée en pivotement au véhicule tandis que l'autre de la partie de béquet et de la partie de grillage au niveau d'une extrémité vers l'arrière est raccordée en articulation (21) à une première extrémité d'au moins un bras de déflecteur d'air pivotant (22) dont une seconde extrémité opposée par le biais d'un deuxième pivot (23) est raccordée en pivotement au véhicule.

2. Ensemble déflecteur d'air selon la revendication 1, dans lequel la partie de béquet (9) est positionnée par-dessus la partie de grillage (10), la partie de grillage au niveau d'une extrémité vers l'avant par le biais dudit premier pivot (16) est raccordée en pivotement au véhicule (1) et la partie de béquet au niveau d'une extrémité vers l'arrière est raccordée en articulation (21) à ladite première extrémité dudit au moins un bras de déflecteur d'air (22).

3. Ensemble déflecteur d'air selon la revendication 1, dans lequel la partie de béquet (9) est positionnée par-dessus la partie de grillage (10), la partie de béquet au niveau d'une extrémité vers l'avant est raccordée en pivotement au véhicule et la partie de grillage au niveau d'une extrémité vers l'arrière est raccordée en articulation à ladite première extrémité dudit au moins un bras de déflecteur d'air (22).

4. Ensemble déflecteur d'air selon l'une quelconque des revendications précédentes, dans lequel le premier pivot (16) a une position mobile par rapport au véhicule (1).

5. Ensemble déflecteur d'air selon la revendication 4, dans lequel le premier pivot (16) est défini par une combinaison d'un canal de guidage incurvé (17) avec un rayon de courbure prédéterminé et un patin coulissant incurvé (18) avec un rayon de courbure similaire pour coopérer avec ledit canal de guidage.

6. Ensemble déflecteur d'air selon la revendication 5, dans lequel le canal de guidage incurvé (17) est une partie fixe du véhicule (1), tandis que le patin coulissant incurvé (18) fait partie de l'une de la partie de béquet (9) et de la partie de grillage (10) qui au niveau d'une extrémité vers l'avant par le biais dudit premier pivot (16) est raccordée en pivotement au véhicule.

7. Ensemble déflecteur d'air selon l'une quelconque des revendications précédentes, dans lequel le deuxième pivot (23) a une position mobile par rapport au véhicule (1).

8. Ensemble déflecteur d'air selon la revendication 7, dans lequel le deuxième pivot (23) est défini par un axe de pivot (24) qui est fixé à ladite seconde extrémité du bras de déflecteur d'air (22) et qui est coulissant dans un canal de guidage (25) qui est une partie fixe du véhicule (1).

9. Ensemble déflecteur d'air selon la revendication 7 ou 8, dans lequel le bras de déflecteur d'air (22) par le biais d'un troisième pivot (27) est raccordé en pivotement à une première extrémité d'un bras auxiliaire (26) dont une seconde extrémité opposée par le biais d'un quatrième pivot fixe (28) est raccordée en pivotement au véhicule (1).

10. Ensemble déflecteur d'air selon la revendication 9, dans lequel le bras auxiliaire (26) précontraint le bras de déflecteur d'air (22) à une position dans laquelle l'organe déflecteur d'air (8) est dans sa position étendue.

11. Ensemble déflecteur d'air selon la revendication 10, dans lequel le bras auxiliaire est défini par un organe ressort (26).

12. Déflecteur d'air selon la revendication 11, dans lequel le bras auxiliaire est une branche d'un ressort de torsion (26).

13. Ensemble déflecteur d'air selon la revendication 2, dans lequel une partie arrière de la partie de béquet (9), vue dans la direction longitudinale, est réalisée au moins en partie en un matériau transparent.

14. Ensemble déflecteur d'air selon la revendication 13, dans lequel la partie de béquet comprend un cadre en forme de U (19) avec deux branches (19') pointant longitudinalement dans une direction vers l'arrière et un panneau en verre (20) monté sur lesdites branches.

15. Ensemble déflecteur d'air selon l'une quelconque des revendications précédentes, dans lequel la partie de grillage (10) comprend un organe de cadre (13, 14) couvrant entre eux un organe grillage (15) dans une position fixe par rapport à l'organe de cadre.

16. Ensemble déflecteur d'air selon l'une quelconque des revendications 1 à 14, dans lequel la partie de grillage (10) comprend un organe de cadre (13) et un organe grillage (15) qui avec un premier bord s'étendant transversalement est raccordé à l'organe cadre et qui avec un second bord opposé s'étendant transversalement est raccordé à une partie fixe (32) du véhicule.

17. Ensemble déflecteur d'air selon l'une quelconque des revendications 1 à 14, dans lequel la partie de grillage (10) comprend un organe cadre (33) pour guider la partie de béquet (9) et un organe grillage (15) qui avec un premier bord s'étendant transversalement est raccordé à la partie de béquet (9) et qui avec un second bord opposé s'étendant transversalement est raccordé à une partie fixe du véhicule (1).

18. Ensemble déflecteur d'air selon l'une quelconque des revendications précédentes, comprenant un bras de déflecteur d'air séparé (22) sur chaque côté transversal de l'organe déflecteur d'air (8).
